# EUROPÄISCHE PATENTANMELDUNG

(11) **EP 4 112 582 A1**
(43) Veröffentlichungstag der Anmeldung: **04.01.2023**
(21) Anmeldenummer: 22182423.8
(22) Anmeldetag: 30.06.2022
(51) Int. Cl.: C04B 35/536, C04B 35/76, C04B 35/80

(54) **THERMAL INTERFACE MATERIAL, ENERGIESPEICHER MIT EINEM THERMAL INTERFACE MATERIAL UND VERFAHREN ZU DEREN HERSTELLUNG**

(30) Priorität: 30.06.2021 DE 102021206824
(71) Anmelder: Fraunhofer-Gesellschaft zur Förderung der angewandten Forschung e.V., 80686 München (DE)
(72) Erfinder: Eppmann, Mathis, 28359 Bremen (DE); Rütters, Martin, 28359 Bremen (DE); Baumeister, Joachim, 28359 Bremen (DE)
(74) Vertreter: Pfenning, Meinig & Partner mbB

(57) **Zusammenfassung**

Die Erfindung betrifft ein Thermal Interface Material (TIM) (1), insbesondere für einen Energiespeicher, umfassend eine Platte (2) aus Blähgraphit, wobei in die Platte (2) eine Armierung (3) eingebettet ist. Die Erfindung betrifft auch einen Energiespeicher mit einem solchen TIM (1) sowie Verfahren zur Herstellung des TIM (1) und des Energiespeichers.

## Beschreibung

Die vorliegende Erfindung betrifft ein Thermal Interface Material (TIM), insbesondere für einen Energiespeicher. Die Erfindung ist mit besonderem Vorteil auf dem Gebiet der Elektromobilität einsetzbar.

Im Kontext elektrischer Anwendungen, insbesondere bei modernen Energiespeichern, die etwa in der Elektromobilität eingesetzt werden, steigen mit zunehmender Leistungsfähigkeit auch die Anforderungen an das Thermomanagement.

Bei Lade- und Entladevorgängen von Energiespeichern in Elektrofahrzeugen entsteht Wärme, die durch entsprechende Thermomanagementsysteme abgeführt werden muss. In der Regel wird Wärme in eine unterhalb eines Batteriemoduls liegende Batteriewanne abgeleitet, wo sich Kühlkanäle befinden können. Zwischen Batteriewanne und Batteriemodul entsteht fertigungsbedingt ein Spalt, der durch ein sogenanntes Thermal Interface Material (TIM) überbrückt werden sollte. Dafür werden nach dem Stand der Technik sogenannte Gapfillerpasten eingesetzt. Diese bieten eine Wärmeleitfähigkeit von in der Regel etwa 3W/MK und sind aufgrund ihrer Fließeigenschaften in der Lage, die Spaltüberbrückung zu gewährleisten. Die Gapfillerpasten sind jedoch vergleichsweise schwer und teuer.

EP 2 745 348 B1 zeigt einen Wärmeableiter, der einen Graphitexpandatformling enthält, der zwei Hauptflächen besitzt, wobei auf zumindest einer Hauptfläche eine Kunststoffschicht angeordnet ist, wobei die zumindest eine Kunststoffschicht durchbrochen ausgebildet ist und eine Lochstruktur, eine Streifen- und/oder eine Mäanderstruktur aufweist.

Vor dem Hintergrund des Standes der Technik, ist es Aufgabe der vorliegenden Erfindung, ein leistungsfähiges Thermomanagement vorzuschlagen, welches die Lebensdauer einer Batterie maximieren kann und gleichzeitig leicht zu fertigen und zu handhaben ist.

Diese Aufgabe wird gelöst durch ein Thermal Interface Material (TIM) gemäß Anspruch 1. Ebenfalls gelöst wird sie durch einen Energiespeicher gemäß Anspruch 11 oder durch ein Verfahren nach einem der Ansprüche 13 oder 15. Vorteilhafte Ausführungen ergeben sich aus den abhängigen Ansprüchen sowie aus der nachfolgenden Beschreibung und den Figuren.

Demgemäß wird ein Thermal Interface Material (TIM) vorgeschlagen, das eine Platte aus Blähgraphit umfasst, wobei in die Platte eine Armierung eingebettet ist.

Das TIM weist vorteilhaft eine optimierte Stabilität auf und ermöglicht gleichzeitig eine gute Wärmeabfuhr. Überdies wird eine Kompression bei niedrigen definierten Kräften ermöglicht, wodurch eine Beschädigung von angrenzenden Strukturen vermieden werden kann.

Ein erfindungsgemäßer Energiespeicher, auf den sich dieses Dokument ebenfalls bezieht, enthält das TIM.

In dem erfindungsgemäßen Herstellungsverfahren wird ein TIM hergestellt indem expandierte Graphitflocken bereitgestellt werden. Eine Armierung wird zwischen den expandierten Graphitflocken bereitgestellt wird. Die Graphitflocken werden dann zu einer Platte kompaktiert werden, in die die Armierung eingebettet ist.

Das Verfahren, das insbesondere bei der Herstellung sämtlicher Ausführungen der hierin beschriebenen TIM zum Einsatz kommen kann, wird später noch näher beschrieben. Es sei betont, dass Merkmale, die hierin nur für das TIM oder den Energiespeicher beschrieben sind, auch für das Verfahren beansprucht werden können und umgekehrt.

Die Armierung kann z.B. aus einem thermisch leitfähigen Material gebildet sein, dessen thermische Leitfähigkeit bspw. mindestens einer thermischen Leitfähigkeit des Blähgraphits entspricht. Das Blähgraphit weist z.B. eine Leitfähigkeit von etwa 4 W/mK auf.

In Ausführungen des TIM weist die Armierung eine thermische Leitfähigkeit von mindestens 4 W/mK oder von mindestens 15 W/mK oder von mindestens 150 W/mK auf. Insbesondere kann die Armierung eine Leitfähigkeit von ca. 200 W/mK haben. Wie nachher noch eingehend erläutert wird, kann es sich um eine Armierung aus Aluminium handeln. Die Armierung kann, z.B. indem sie aus Aluminium gefertigt wird, bspw. eine thermische Leitfähigkeit von 190 - 230 W/mK aufweisen.

In einer möglichen Ausführung weist die Armierung Maschen auf. Dadurch kann einerseits ein Gewicht der Armierung und damit des TIM gering gehalten werden, andererseits kann bei einem Herstellungsprozess die Einbettung der Armierung in das Blähgraphit vorteilhaft erfolgen, da das Blähgraphit durch die Maschen hindurchtreten kann.

Die Armierung kann beispielsweise als Geflecht oder als Textilstruktur oder als Streckmetall ausgebildet sein.

Die Armierung kann beispielsweise aus Aluminium oder aus Kupfer oder aus Kohlenstoff oder aus Keramik sein.

Die Armierung kann beispielsweise eine Struktur mit Maschen, insbesondere ein Geflecht, aus Aluminium oder aus Kupfer oder aus Kohlenstoff oder aus Keramik sein. Es ist ebenfalls möglich, eine Armierung aus einem Polymer vorzusehen, etwa in Form einer Struktur mit Maschen, insbesondere in Form eines Geflechts.

Die Armierung kann bspw. ein Streckmetall aus Aluminium oder Kupfer sein. Die Armierung kann bspw. auch ein metallisiertes Hakenband oder Abstandsgewirke oder Velours oder Polgewirke oder Gewebe sein bzw. umfassen. Die Armierung kann insbesondere ein verkupfertes oder versilbertes Hakenband oder Abstandsgewirke oder Velours oder Polgewirke oder Gewebe sein oder umfasst.

Eine Maschenweite der Armierung kann beispielsweise mindestens 3 mm oder mindestens 5 mm betragen. Alternativ oder zusätzlich kann die Maschenweite höchstens 15 mm oder höchstens 10 mm betragen. Dadurch kann erreicht werden, dass das Blähgraphit besonders gut durch die Maschen treten kann, wobei gleichzeitig das Gewicht minimiert wird und eine Handhabungsfestigkeit ausreichend verbessert wird.

Es kann vorgesehen sein, dass die Armierung frei von Kunststoff ist. Insbesondere kann vorgesehen sein, dass das gesamte TIM frei von Kunststoff ist.

Die Platte weist zwei einander gegenüberliegende Hauptflächen auf, die typischerweise jeweils eine angrenzende Struktur kontaktieren können.

Das TIM kann derart ausgestaltet sein, dass die Armierung mit einer der Hauptflächen, also mit der oberen Hauptfläche oder der unteren Hauptfläche der Platte bündig abschließt. Die Armierung kann aber auch zur oberen Hauptfläche hin und zur unteren Hauptfläche hin vollständig von dem Blähgraphit der Platte abgedeckt sein, wobei sie z.B. zentral oder dezentral angeordnet sein kann. Alternativ oder zusätzlich kann die Armierung seitlich bündig mit der Platte abschließen. Die Armierung kann aber auch seitlich vollständig von der Platte umschlossen sein und dabei z.B. bis auf weniger als 1 cm an den Rand der Platte heranreichen. Dadurch kann eine Stabilität bis in Randbereiche des TIM erhöht werden.

Dadurch, dass die Armierung in die Platte eingebettet ist und die Armierung vorzugsweise selbst eine gute Wärmeleitfähigkeit aufweist, kann ein guter Wärmeübertrag über die Hauptflächen ermöglicht werden.

Die Platte kann z.B. laterale Abmessungen von mindestens 10 cm x 10 cm oder von mindestens 10 cm x 20 cm aufweisen. Die Abmessungen betragen dabei typischerweise nicht mehr als 50 cm x 50 cm. In einem Beispiel weist die Platte laterale Abmessungen von 35 cm x 15 cm auf.

Das TIM kann in einem relaxierten Zustand, in dem die Platte nicht durch Druck weiterer Komponenten komprimiert ist, bspw. eine Dicke von 2 mm oder von weniger als 2 mm aufweisen. Die Dicke der Platte kann dabei entsprechend der gewünschten Anwendung gewählt werden und sie kann auch mehr als 2 mm betragen, z.B. bis zu 3 mm oder bis zu 4 mm.

Die Platte kann in einem Beispiel insgesamt etwa Abmessungen von 35 cm x 15 cm x 0,2 cm aufweisen, wenn das Blähgraphit relaxiert ist.

Das TIM kann beispielsweise auf eine Dicke von 1 mm komprimierbar sein.

Das TIM kann derart ausgebildet oder gefertigt sein, dass das Blähgraphit im relaxierten Zustand eine Dichte von mindestens 0,05 g/cm³ und/oder von höchstens 0,1 g/cm³ aufweist. Insbesondere kann das Blähgraphit eine Dichte von 0,07 g/cm³ aufweisen. Dies wird im Herstellungsprozess erreicht, indem die Kompaktierung der Graphitflocken gesteuert wird, um eine Platte mit einer Dichte von weniger als 0,1 g/cm³ zu erzeugen.

Derartige TIM weisen ein geringes Gewicht auf, was gerade im Bereich der Elektromobilität einen Vorteil darstellt. Außerdem kann durch die Wahl derartiger Dichten ein Druck, der durch das TIM auf angrenzende Strukturen ausgeübt wird, vorteilhaft gering gehalten werden.

In möglichen Ausführungen ist das Blähgraphit der Platte mit einem Tränkmittel getränkt. Dadurch können Eigenschaften der Platte modifiziert werden. Es kann beispielsweise eine weitere Stabilisierung bewirkt werden und/oder es kann eine Lebensdauer verbessert werden, indem durch das Tränkmittel bspw. eine Korrosionsbeständigkeit verbessert wird. Insbesondere kann es zur Vermeidung von Kontaktkorrosion beitragen. Das Tränkmittel kann beispielsweise Silikonöl enthalten oder Silikonöl sein.

Es kann vorgesehen sein, dass die Poren des Blähgraphits zu höchstens 50 % oder zu höchstens 40 % mit dem Tränkmittel gefüllt sind.

Zur Herstellung einer getränkten Platten kann ein Tränken erfolgen, indem die Platte, die die Armierung enthält, auf ein Reservoir des Tränkmediums aufgelegt wird, so dass sie das Tränkmedium mit der Unterseite kontaktiert. Dies kann insbesondere derart erfolgen, dass die Platte nicht gänzlich eingetaucht wird. Das Tränken kann insbesondere drucklos, insbesondere unter Verwendung einer Kapillarwirkung, erfolgen. Das Tränken kann auch erfolgen indem die Poren der Platte zunächst evakuiert werden, indem die Platte einem Unterdruck ausgesetzt wird, und die Platte dann mit dem Tränkmedium in Kontakt gebracht wird.

Das TIM kann derart ausgestaltet sein, dass es aus der Platte und der Armierung besteht und keine weiteren Bestandteile aufweist. Insbesondere ist kein Klebstoff als zusätzlicher Bestandteil vorhanden. Dabei kann das Blähgraphit der Platte getränkt sein, oder es kann sich um nicht getränktes Blähgraphit handeln.

Wie erwähnt, ist hierin auch ein Energiespeicher offenbart. Er umfasst ein Batteriemodul und eine Batteriewanne, wobei zwischen dem Batteriemodul und der Batteriewanne ein TIM angeordnet ist, das eine Platte aus Blähgraphit umfasst, in die eine Armierung eingebettet ist.

Das hierin beschriebene TIM kann in sämtlichen beschriebenen Ausführungen als TIM in diesem Energiespeicher verwendet werden.

Bei dem Energiespeicher kann es sich um eine Antriebsbatterie für ein Elektrofahrzeug, insbesondere für ein Elektroauto, handeln.

Bei dem Energiespeicher besteht zwischen dem Batteriemodul und der Batteriewanne ein Zwischenraum. Ein solcher Zwischenraum ist typischerweise fertigungsbedingt nicht vermeidbar. Der Zwischenraum ist durch das TIM vorzugsweise vollständig ausgefüllt. Vorzugsweise erfolgt also eine vollflächige Kontaktierung des TIM, so dass ein Wärmeübertrag zwischen dem Batteriemodul und der Batteriewanne optimiert wird.

Bei dem Energiespeicher kann ein Zwischenraum zwischen dem Batteriemodul und der Batteriewanne eine Höhe von zwischen 1 mm und 2mm aufweisen.

Ein durch das TIM, insbesondere durch das komprimierte TIM, auf die Batteriewanne und/oder das Batteriemodul ausgeübter Druck beträgt zum Beispiel höchstens 2,5 bar. Bei den oben für das TIM angegebenen Dichten wird vorteilhaft diese Druckschwelle bis zum Erreichen der maximalen Kompression bei z.B. 1 mm Dicke nicht überschritten und eine Beschädigung von Batteriekomponenten, also z.B. von Batteriemodul oder Batteriewanne vermieden.

Die Armierung kann beispielsweise dezentral, insbesondere in der Nähe einer der Hauptflächen oder bündig mit einer der Hauptflächen, angeordnet sein. Insbesondere kann die Armierung dabei in Richtung der Batteriewanne, also insbesondere in Richtung der unteren Hauptfläche dezentral angeordnet sein. Es ist aber auch möglich, die Armierung zentral oder in der Nähe der oberen Hauptfläche anzuordnen.

Ein mögliches Tränkmittel kann beispielsweise auf der Seite der Batteriewanne angeordnet sein.

Die Herstellung des Energiespeichers kann erfolgen, indem zunächst das TIM auf die eingangs beschriebene Weise hergestellt wird. Das TIM kann in eine Batteriewanne eingelegt werden. Dabei kann z.B. Vakuumgreiftechnik verwendet werden. Das Batteriemodul wird anschließend auf das TIM aufgesetzt, wobei sich dieses verformt. Das Batteriemodul wird dann relativ zu der Batteriewanne in einer Sollposition befestigt.

Nachfolgend wird die Erfindung anhand von Figuren beispielhaft erläutert.

Darin zeigen:
- Fig. 1: einen Energiespeicher mit einem Thermal Interface Material (TIM),
- Fig. 2a: Das TIM in einer Draufsicht von oben,
- Fig. 2b: einen Schnitt durch das TIM gemäß einer ersten Ausführung, in einem relaxierten Zustand,
- Fig. 2c: den Schnitt durch das TIM gemäß der ersten Ausführung, in einem komprimierten Zustand,
- Fig. 2d: den Schnitt durch das TIM gemäß einer zweiten Ausführung, in einem relaxierten Zustand,
- Fig. 2e: den Schnitt durch das TIM gemäß der zweiten Ausführung, in einem komprimierten Zustand, und
- Fign. 3a-3d: verschiedene Armierungen für das TIM.

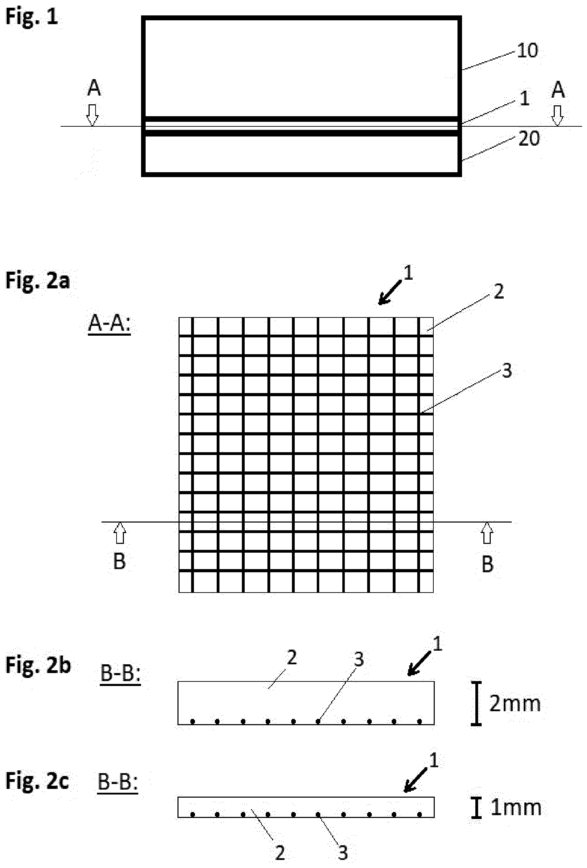

Figur 1 stellt schematisch einen Energiespeicher in einer Seitenansicht dar. Der Energiespeicher umfasst ein Batteriemodul 10, das oberhalb einer Batteriewanne 20 angeordnet ist, wobei zwischen dem Batteriemodul 10 und der Batteriewanne 20 ein Thermal Interface Material (TIM) 1 angeordnet ist. Das TIM 1 und seine Komponenten werden im Zusammenhang mit den nachfolgenden Figuren noch eingehend erläutert. Das TIM 1 umfasst eine Platte 2 aus Blähgraphit, in die eine Armierung 3 eingebettet ist (vgl. z.B. Fign. 2a-2e).

Der Energiespeicher aus Figur 1 ist als Antriebsbatterie für ein Elektroauto ausgeführt.

In dem Batteriespeicher wird eine Wärmeübertragung zwischen dem Batteriemodul 10 und der Batteriewanne durch das TIM 1 begünstigt. Die Batteriewanne 20 und das Batteriemodul 10 stellen aufeinander angepasste Komponenten dar. Ein Spalt zwischen der Batteriewanne 20 und dem Batteriemodul 20 ist fertigungsbedingt in der Regel nicht gänzlich zu vermeiden. Dieser Spalt wird durch das TIM 1 überbrückt, indem dieses den Spalt vollständig ausfüllt und so einen thermischen Austausch ermöglicht. Der Spalt wird bei der Herstellung der Komponenten auf 1,5 mm ± 0,5 mm eingestellt.

Das Blähgraphit des TIM 1 ist komprimierbar. Das TIM 1 ist so ausgestaltet, dass des in einem relaxierten, also nicht komprimierten Zustand eine Dicke von 2 mm aufweist und sich auf 1 mm komprimieren lässt.

Das TIM 1 wird in die Batteriewanne 20 eingelegt und dann das Batteriemodul 10 unter zumindest bereichsweiser Kompression des TIM 1 aufgedrückt. Schließlich wird das Batteriemodul in seiner Sollposition in Bezug auf die Batteriewanne 10 fixiert. Aufgrund der Abmessungen des Spaltes und des TIM 1 ist der Spalt nun vollständig durch das TIM 1 ausgefüllt, wobei die Dichte und Verformbarkeit des TIM 1 derart gewählt ist, dass ein durch das TIM 1 auf die Batteriewanne 10 und das Batteriemodul 20 ausgeübter Druck 2,5 bar nicht übersteigt und eine Dicke des TIM 1 einen Millimeter nicht unterschreitet. Dazu wird für das TIM 1 eine Dichte von unter 0,1 g/cm³ gewählt, z.B. 0,07 g/cm³.

Das Blähgraphit weist eine thermische Leitfähigkeit von etwa 4 W/mK auf und eine thermische Leitfähigkeit der darin enthaltenen Armierung (s.u., Fign. 2a-3d) liegt noch höher, so dass insgesamt ein vorteilhafter Wärmeübertrag ermöglicht wird. Gleichzeitig ist die Vorrichtung robust und leicht.

Figur 2a zeigt den in Figur 1 eingezeichneten Schnitt A-A durch das TIM 1, d.h. einen horizontalen Schnitt in einer Ansicht von oben.

Die lateralen Abmessungen der Platte 2 und also des TIM 1, die in der Figur 2a erkennbar sind, betragen mehr als 10 x 20 cm. Zum Beispiel betragen sie 15 cm x 35 cm.

Der Schnitt der Figur 2a offenbart die Armierung 3, die eine Maschenstruktur aufweist. Sie offenbart auch das Blähgraphit, welches die Platte 2 ausbildet, und sich zwischen den Maschen erstreckt. Die Armierung 3 schließt dabei lateral bündig mit dem Blähgraphit der Platte 2 ab.

Die Maschenstruktur wird durch ein Aluminiumgeflecht ausgebildet. Das Aluminium besitzt eine Wärmeleitfähigkeit, die höher liegt als die des Blähgraphits. Das Aluminium hat eine Wärmeleitfähigkeit von zwischen 190 und 230 W/mK und eine verhältnismäßig geringe Dichte, so dass das gesamte TIM 1 in Bezug auf Gewicht und Wärmeleitfähigkeit vorteilhaft ausgebildet ist.

Das Aluminiumgeflecht weist Maschen mit einer Maschenweite von zwischen 3 mm und höchstens 15 mm auf.

Die Herstellung des TIM 1 erfolgt, indem expandierte Graphitflocken erzeugt werden. Dies erfolgt, indem ein Blähbasisgraphit in Form von Plättchen, die wenige Molekülschichten dick sind, in einem Ofen erhitzt wird (auf etwa 600°C), so dass es expandiert und die expandierten Graphitflocken bildet.

Die expandierten Graphitflocken werden in eine Kompaktierungsvorrichtung geschüttet, in die, zuvor oder danach, auch die Armierung 3 eingelegt wird. Die expandierten Graphitflocken können aufgrund der Maschenabmessungen die Maschen der Armierung 3 durchdringen und ausfüllen.

Mit Hilfe der Kompaktierungsvorrichtung werden die expandierten Graphitflocken gepresst, so dass die Graphitflocken sich unter Verformung ineinander verklammern und die Platte 2 ausbilden, wobei diese die zwischen den Graphitflocken befindliche Armierung 3 enthält. Die Armierung 3 stabilisiert die Platte 2 und erleichtert ihre Handhabung.

Die Kompaktierung erfolgt in dem Maße, dass eine Dichte der so erzeugten Platte 2 im relaxierten Zustand weniger als 0,1 g/cm³ beträgt, nämlich zum Beispiel 0,07 g/cm³.

Die Blähgraphitstruktur der Platte 2 ist porös und verformbar.

Fign. 2b und 2c zeigen den in Fig. 2a eingezeichneten Schnitt durch das TIM 1, d.h. eine Ansicht von vorne, in der eine Position der Armierung in Bezug auf die Platte 2 erkennbar ist. Fig. 2b zeigt die Platte 2 dabei im unkomprimierten Zustand, in dem ihre Dicke 2 mm beträgt. Fig. 2c zeigt die Platte im komprimierten Zustand, z.B. nach Einbau, wobei ihre Dicke nur 1 mm beträgt.

Die Armierung 3 ist dabei in der gezeigten ersten Ausführung der Figuren 2b und 2c an der unteren Hauptflache angeordnet und schließt mit dieser bündig ab. Das heißt, die Armierung ist zur Batteriewanne 20 hin verschoben und kontaktiert Abschnitte der Batteriewanne 20.

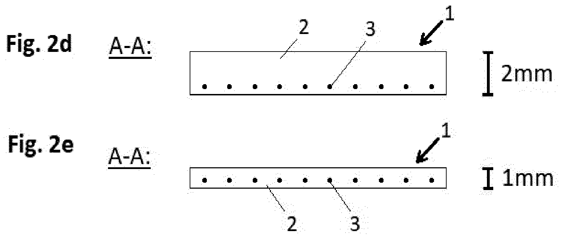

Figuren 2d und 2e zeigen den gleichen Schnitt wie die Figuren 2b und 2c-ebenfalls vor bzw. nach Kompression - wobei hier die Platte 2 in einer zweiten Ausführung vorliegt. Demnach ist die Armierung 3 in Richtung der unteren Hauptfläche und also in Richtung der Batteriewanne 20 versetzt, Die Armierung 3 schließt dabei aber unten nicht bündig mit der Platte 2 ab sondern ist unten gänzlich von dem Blähgraphit der Platte 2 abgedeckt, so dass die Armierung 3 die Batteriewanne nicht direkt kontaktiert.

In den Fällen der ersten Ausführung und auch der zweiten Ausführung können die Poren des TIM 1 optional mit einem Tränkmittel, insbesondere Silikonöl, teilweise, z.B. zu bis zu 40 %, gefüllt sein. Die Füllung mit dem Tränkmittel kann dabei zum Beispiel in der Nähe der unteren Hauptfläche, das heißt an der der Batteriewanne 20 zugewandten Seite vorliegen.

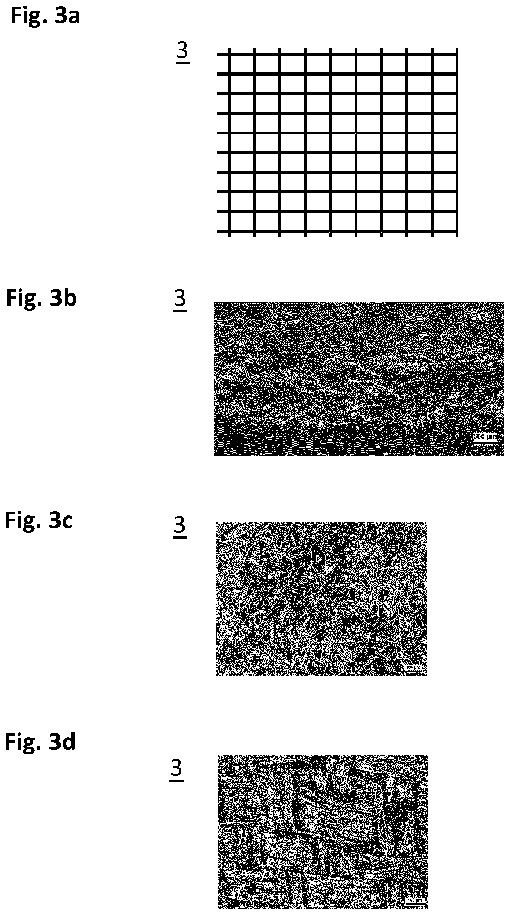

Fign. 3a-3d illustrieren verschiedene mögliche Armierungen, die in dem TIM 1 eingesetzt werden können

Figur 3a zeigt eine als Geflecht ausgestaltete Armierung. Diese kann wie oben beschrieben aus Aluminium sein. Sie kann auch aus Kupfer oder aus Kohlenstoff oder aus Keramik sein.

Fign. 3b bis 3d zeigen verkupferte Textilstrukturen, die als Armierung 3 eingesetzt werden können.

Die vorliegende Anmeldung offenbart unter anderem die folgenden Aspekte, die hilfreich sind für das Verständnis der Erfindung:
1. Thermal Interface Material (TIM) (1), insbesondere für einen Energiespeicher, umfassend eine Platte (2) aus Blähgraphit, wobei in die Platte (2) eine Armierung (3) eingebettet ist.
2. TIM (1) nach Aspekt 1, wobei die Armierung (3) aus einem thermisch leitfähigen Material gebildet ist, wobei die thermische Leitfähigkeit der Armierung (3) insbesondere mindestens einer thermischen Leitfähigkeit des Blähgraphits entspricht und/oder wobei die Armierung (3) eine thermische Leitfähigkeit von mindestens 4 W/mK oder von mindestens 15 W/mK oder von mindestens 150 W/mK aufweist.
3. TIM (1) nach einem der vorhergehenden Aspekte, wobei die Armierung Maschen aufweist.
4. TIM (1) nach einem der vorhergehenden Aspekte, wobei die Armierung (3) als Geflecht oder als Textilstruktur oder als Streckmetall aus-gebildet ist.
5. TIM (1) nach einem der vorhergehenden Aspekte, wobei die Armierung (3) ein Geflecht aus Aluminium oder aus Kupfer oder aus Kohlenstoff oder aus Keramik ist.
6. TIM (1) nach einem der vorhergehenden Aspekte, wobei die Armierung (3) ein Streckmetall aus Aluminium oder Kupfer ist oder wobei die Armierung (3) ein metallisiertes Hakenband oder Abstandsgewirke oder Velours oder Polgewirke oder Gewebe umfasst, insbesondere ein verkupfertes oder versilbertes Hakenband oder Abstandsgewirke oder Velours oder Polgewirke oder Gewebe umfasst.
7. TIM (1) nach einem der vorhergehenden Aspekte wobei eine Maschenweite der Armierung (3) mindestens 3 mm und/oder höchstens 15 mm beträgt.
8. TIM (1) nach einem der vorhergehenden Aspekte, wobei die Armierung (3) frei von Kunststoff ist und insbesondere das TIM (1) frei von Kunststoff ist.
9. TIM (1) nach einem der vorhergehenden Aspekte, wobei das TIM (1) in einem relaxierten Zustand eine Dicke von 2 mm oder von weniger als 2 mm aufweist.
10. TIM (1) nach einem der vorhergehenden Aspekte, wobei das TIM (1) auf eine Dicke von 1 mm komprimierbar ist.
11. TIM (1) nach einem der vorhergehenden Aspekte, wobei die Platte (2) laterale Abmessungen von mindestens 10 cm x 10 cm oder von mindestens 10 cm x 20 cm aufweist, wobei die Platte (2) insbesondere laterale Abmessungen von 15 cm x 35 cm aufweist.
12. TIM (1) nach einem der vorhergehenden Aspekte, wobei das Bläh-graphit im relaxierten Zustand eine Dichte von mindestens 0,05 g/cm³ und/oder von höchstens 0,1 g/cm³ aufweist, insbesondere eine Dichte von 0,07 g/cm³.
13. TIM (1) nach einem der vorhergehenden Aspekte, wobei die Armierung (3) mit einer oberen Hauptfläche oder unteren Hauptfläche der Platte (2) bündig abschließt, oder wobei die Armierung (3) zur oberen Hauptfläche und zur unteren Hauptfläche hin vollständig von dem Blähgraphit der Platte (2) abgedeckt ist und/oder wobei die Armierung (3) seitlich bündig mit der Platte (2) abschließt oder seitlich vollständig von der Platte (2) umschlossen ist.
14. TIM (1) nach einem der vorhergehenden Aspekte, wobei das Bläh-graphit der Platte (2) mit einem Tränkmittel getränkt ist.
15. TIM (1) nach einem der vorhergehenden Aspekte, wobei das TIM (1) aus der Platte (2) aus getränktem oder nicht getränktem Blähgraphit und der Armierung (3) besteht.
16. TIM (1) nach Aspekt 14 oder 15, wobei das Tränkmittel Silikonöl ist oder Silikonöl enthält und/oder wobei Poren des Blähgraphits zu höchs-tens 50 % oder zu höchstens 40 % gefüllt sind.
17. Energiespeicher, umfassend ein Batteriemodul (10) und eine Batteriewanne (20), wobei zwischen dem Batteriemodul (10) und der Batteriewanne (20) ein Thermal Interface Material (TIM) (1) angeordnet ist, insbesondere das TIM (1) nach einem der vorhergehenden Aspekte, wobei das TIM (1) eine Platte (2) aus Blähgraphit umfasst, in die eine Armierung (3) eingebettet ist.
18. Energiespeicher nach Aspekt 17, wobei ein Zwischenraum zwischen dem Batteriemodul (10) und der Batteriewanne (20) eine Höhe von zwischen 1 mm und 2 mm aufweist und der Zwischenraum von dem TIM (1) vollständig ausgefüllt ist.
19. Energiespeicher nach Aspekt 17 oder 18, wobei ein durch das TIM (1) auf die Batteriewanne (20) und/oder das Batteriemodul (10) ausgeübter Druck höchstens 2,5 bar beträgt.
20. Energiespeicher nach einem der Aspekte 16 bis 19, wobei es sich um eine Antriebsbatterie für ein Elektrofahrzeug, insbesondere für ein Elektroauto, handelt.
21. Herstellung eines Thermal Interface Materials (TIM) (1) für einen Energiespeicher, insbesondere eines TIM (1) nach einem der vorhergehenden Aspekte, wobei expandierte Graphitflocken bereitgestellt werden und eine Armierung (3) zwischen den expandierten Graphitflocken bereitgestellt wird, wobei die Graphitflocken zu einer Platte (2) kompaktiert werden, in die die Armierung (3) eingebettet ist.
22. Herstellung eines TIM (1) gemäß Aspekt 20, wobei die Graphitflocken zu einer Platte mit einer Dichte von weniger als 0,1 g/cm³ kompaktiert werden.
23. Herstellung eines Energiespeichers, wobei ein TIM (1) gemäß einem der Aspekte 21 oder 22 hergestellt wird, wobei das TIM (1) in eine Batteriewanne (10) eingelegt wird, insbesondere unter Verwendung von Vakuumgreiftechnik, wobei ein Batteriemodul (20) auf das TIM (1) unter Verformung des TIM (1) aufgedrückt wird und das Batteriemodul (20) relativ zu der Batteriewanne (10) befestigt wird.

## Patentansprüche

1. Thermal Interface Material (TIM) (1), insbesondere für einen Energiespeicher, umfassend eine Platte (2) aus Blähgraphit, wobei in die Platte (2) eine Armierung (3) eingebettet ist.

2. TIM (1) nach Anspruch 1, wobei die Armierung (3) aus einem thermisch leitfähigen Material gebildet ist, wobei die thermische Leitfähigkeit der Armierung (3) insbesondere mindestens einer thermischen Leitfähigkeit des Blähgraphits entspricht und/oder wobei die Armierung (3) eine thermische Leitfähigkeit von mindestens 4 W/mK oder von mindestens 15 W/mK oder von mindestens 150 W/mK aufweist.

3. TIM (1) nach einem der vorhergehenden Ansprüche, wobei die Armierung Maschen aufweist und/oder wobei die Armierung (3) als Geflecht oder als Textilstruktur oder als Streckmetall ausgebildet ist und/oder wobei die Armierung (3) ein Geflecht aus Aluminium oder aus Kupfer oder aus Kohlenstoff oder aus Keramik ist.

4. TIM (1) nach einem der vorhergehenden Ansprüche, wobei die Armierung (3) ein Streckmetall aus Aluminium oder Kupfer ist oder wobei die Armierung (3) ein metallisiertes Hakenband oder metallisiertes Abstandsgewirke oder metallisiertes Velours oder metallisiertes Polgewirke oder metallisiertes Gewebe umfasst, insbesondere ein verkupfertes oder versilbertes Hakenband oder verkupfertes oder versilbertes Abstandsgewirke oder verkupfertes oder versilbertes Velours oder verkupfertes oder versilbertes Polgewirke oder verkupfertes oder versilbertes Gewebe umfasst.

5. TIM (1) nach einem der vorhergehenden Ansprüche wobei eine Maschenweite der Armierung (3) mindestens 3 mm und/oder höchstens 15 mm beträgt und/oder wobei die Armierung (3) frei von Kunststoff ist und insbesondere das TIM (1) frei von Kunststoff ist und/oder wobei die Platte (2) laterale Abmessungen von mindestens 10 cm x 10 cm oder von mindestens 10 cm x 20 cm aufweist, wobei die Platte (2) insbesondere laterale Abmessungen von 15 cm x 35 cm aufweist.

6. TIM (1) nach einem der vorhergehenden Ansprüche, wobei das TIM (1) in einem relaxierten Zustand eine Dicke von 2 mm oder von weniger als 2 mm aufweist.

7. TIM (1) nach einem der vorhergehenden Ansprüche, wobei das TIM (1) auf eine Dicke von 1 mm komprimierbar ist, wobei vorzugsweise bei einer Kompression auf 1 mm ein Druck von 2,5 bar nicht überschritten wird.

8. TIM (1) nach einem der vorhergehenden Ansprüche, wobei das Blähgraphit im relaxierten Zustand eine Dichte von mindestens 0,05 g/cm³ und/oder von höchstens 0,1 g/cm³ aufweist, insbesondere eine Dichte von 0,07 g/cm³.

9. TIM (1) nach einem der vorhergehenden Ansprüche, wobei die Armierung (3) mit einer oberen Hauptfläche oder unteren Hauptfläche der Platte (2) bündig abschließt, oder wobei die Armierung (3) zur oberen Hauptfläche und zur unteren Hauptfläche hin vollständig von dem Blähgraphit der Platte (2) abgedeckt ist und/oder wobei die Armierung (3) seitlich bündig mit der Platte (2) abschließt oder seitlich vollständig von der Platte (2) umschlossen ist und/oder wobei die Armierung dezentral, in Richtung einer oberen Hauptfläche oder in Richtung einer unteren Hauptfläche der Platte (2) angeordnet ist, vorzugsweise im oberen Drittel oder im unteren Drittel der Platte (2) und/oder wobei das Blähgraphit der Platte (2) mit einem Tränkmittel getränkt ist, wobei das Tränkmittel vorzugsweise Silikonöl ist oder Silikonöl enthält und/oder wobei Poren des Blähgraphits vorzugsweise zu höchstens 50 % oder zu höchstens 40 % gefüllt sind.

10. TIM (1) nach einem der vorhergehenden Ansprüche, wobei das TIM (1) aus der Platte (2) aus getränktem oder nicht getränktem Blähgraphit und der Armierung (3) besteht und/oder wobei das TIM (1) frei von Klebstoff ist und die Armierung (3) durch eine Verklammerung von Partikeln des Blähgraphits der Platte (2) mit der Armierung (3) fixiert ist.

11. Energiespeicher, beispielsweise eine Antriebsbatterie für ein Elektrofahrzeug, umfassend ein Batteriemodul (10) und eine Batteriewanne (20), wobei zwischen dem Batteriemodul (10) und der Batteriewanne (20) ein Thermal Interface Material (TIM) (1) angeordnet ist, insbesondere das TIM (1) nach einem der vorhergehenden Ansprüche, wobei das TIM (1) eine Platte (2) aus Blähgraphit umfasst, in die eine Armierung (3) eingebettet ist.

12. Energiespeicher nach Anspruch 11, wobei das TIM (1) durch das Batteriemodul (10) und die Batteriewanne (20) kompaktiert ist und/oder wobei ein Zwischenraum zwischen dem Batteriemodul (10) und der Batteriewanne (20) eine Höhe von zwischen 1 mm und 2 mm aufweist und der Zwischenraum von dem TIM (1) vollständig ausgefüllt ist und/oder wobei ein durch das TIM (1) auf die Batteriewanne (20) und/oder das Batteriemodul (10) ausgeübter Druck höchstens 2,5 bar beträgt.

13. Herstellung eines Thermal Interface Materials (TIM) (1) für einen Energiespeicher, insbesondere eines TIM (1) nach einem der Ansprüche 1-10, wobei expandierte Graphitflocken bereitgestellt werden und eine Armierung (3) zwischen den expandierten Graphitflocken bereitgestellt wird, wobei die Graphitflocken zu einer Platte (2) kompaktiert werden, in die die Armierung (3) eingebettet ist.

14. Herstellung eines TIM (1) gemäß Anspruch 13, wobei die Graphitflocken zu einer Platte mit einer Dichte von weniger als 0,1 g/cm³ kompaktiert werden.

15. Herstellung eines Energiespeichers, wobei ein TIM (1) mittels eines Verfahrens gemäß einem der Ansprüche 13 oder 14 hergestellt wird, wobei das TIM (1) in eine Batteriewanne (10) eingelegt wird, insbesondere unter Verwendung von Vakuumgreiftechnik, wobei ein Batteriemodul (20) auf das TIM (1) unter Verformung des TIM (1) aufgedrückt wird und das Batteriemodul (20) relativ zu der Batteriewanne (10) befestigt wird, wobei vorzugsweise ein durch die Batteriewanne (10) und/oder durch das Batteriemodul (20) auf das TIM (1) ausgeübter Druck zur Verformung, nämlich Kompaktierung, des TIM (1) höchstens 2,5 bar beträgt.
